# EUROPEAN PATENT APPLICATION

(11) **EP 4 712 308 A1**
(43) Date of publication of application: **18.03.2026**
(21) Application number: 24199883.0
(22) Date of filing: 11.09.2024
(51) Int. Cl.: H02J 50/12

(54) **SYNCHRONIZATION BASED ON FUNDAMENTAL HARMONIC RESONANCE**

(71) Applicant: WiTricity AI Tech, LLC, Midway, GA 31320 (US)
(72) Inventor: Le, Nam Hoai, Midway, 31320 (US)
(74) Representative: HG Law International LLP

(57) **Abstract**

Synchronization within a wireless power transmission system is used to ensure proper transfer of power. An example wireless power system includes a wireless power transmitter and a wireless power receiver, wherein the wireless power transmitter comprises a transmitter controller. The wireless power receiver comprises filter circuitry configured to receive an input signal from the wireless power transmitter, identify a harmonic signal of the input signal, and generate a filtered signal. The wireless power receiver also comprises converter circuitry configured to convert the filtered signal to an output signal, and a receiver controller configured to control the converter circuitry, wherein the receiver controller is synchronized with the transmitter controller based on the harmonic signal identified by the filter circuitry.

## Description

### Background

Many electronic devices are powered via rechargeable batteries. Such devices include electric vehicles, mobile phones, portable music players, laptop computers, tablet computers, computer peripheral devices, communication devices (e.g., Bluetooth devices), digital cameras, hearing aids, and the like. Historically, rechargeable devices have been charged via wired connections through cables or other similar connectors that are physically connected to a power supply. More recently, wireless charging systems are being used to transfer power in free space to be used to charge or provide power to electronic devices. The transfer of power in free space may be dependent on the orientation of a transmitting and receiving units, the circuitry included therein, and/or other internal or external factors. Minor changes in, for example, the relative position and/or resonant frequencies of the transmitting and receiving units during charging operations can create stress on the circuit components. These potential variations in operating parameters must be accounted for in the system design, often meaning that systems are over designed to ensure the components are robust enough to accommodate these changes. Such overly robust designs can increase the unit cost, and may have other undesired performance characteristics. Wireless power transfer systems and methods that allow for more cost effect designs to control and safely transfer power to electronic devices in such dynamic environments are desirable.

Wireless power transfer (WPT) for charging electric vehicles is described in detail in patents such as U.S. Patents 8,933,594, titled "Wireless energy transfer for vehicles," and 9,561,730, titled "Wireless power transmission in electric vehicles," which are incorporated here by reference in their entirety. More specifically, these patents refer to inductive WPT between a ground-based unit of a wireless charging station and a vehicle-based unit, herein also simply referred to as the ground unit or ground assembly and the vehicle unit or vehicle assembly, respectively.

Efficient and regulatory compliant WPT for electric vehicles requires a WPT coil in the vehicle unit to be aligned with a WPT coil in the ground unit within a specified tolerance zone. Some standards specify a tolerance zone of +/- 75 mm in x-direction (vehicle longitudinal axis) and +/- 100 mm in γ-direction (vehicle lateral axis). Therefore, one aspect of WPT for charging electric vehicles to be addressed is assisting a user or an autonomous driving system to park and align the vehicle within the relatively tight tolerance zone sometimes also referred to as "charging spot". Such park assist systems may also include guidance of the user or the autonomous driving system in steering the vehicle towards the ground unit.

A further aspect of WPT for electric vehicle charging is establishing wireless communications between the vehicle and the wireless charging station the vehicle is attempting to use for charging. Standard compliant WPT for electric vehicles requires the wireless charging station to communicate with the vehicle via a wireless communication network for purposes of WPT system control and other WPT-related functions (e.g., for the safety of the system). This communication is based on WiFi IEEE 802.11x using standardized protocols enabling interoperability. Establishing wireless communications may be particularly difficult in a parking facility with multiple wireless charging stations at which multiple EVs may be attempting to park at the same time. It is necessary to disambiguate the connections - that is, make sure that each vehicle is in communication with the wireless charging station it is attempting to use for charging, and not another e.g., neighboring station. This disambiguation is part of a process referred to as pairing and shall ensure that a wireless communication node (e.g., a WiFi client) associated to the vehicle communicates with a wireless communication node (e.g., a WiFi access point) associated to the right wireless charging station.

### Summary

As noted above, WPT systems typically use electromagnetic fields to transmit electrical energy between a wireless power transmitter and a wireless power receiver, without the need for a physical connection. Due to the nature of the power transfer, synchronization between the wireless power transmitter and the wireless power receiver is needed in order to enable the system to operate effectively.

Some techniques for enabling synchronization include using an external shared clock, or transmitting timing information from the transmitter to the receiver. These techniques, however, require additional hardware, increasing overall cost and complexity of the system. Additionally, using an external shared clock can bring other challenges such as requiring high precision (e.g., high cost) as well as requiring consistent operating conditions. These techniques may thus not be appropriate for all use cases, particularly where the transmitter and receiver may move with respect to each other such as in the context of wireless charging of vehicles.

Another technique for synchronization may include using the rectifier current in the wireless power receiver as a reference signal. The rectifier current in the wireless power receiver may be temporally tied to the signal transmitted by the wireless power transmitter, thereby providing a reference signal at the receiver by which to synchronize the receiver with the transmitter. However, the rectifier current signal may have multiple zero crossings, meaning it may be unstable for use as a reference signal for synchronization. In some cases, the system may avoid multiple zero crossings by operating with a high reactive power. The rectifier current is a result of the apparent power, and the apparent power is a combination of the real power and the reactive power. Where there is a high real power, the issue of multiple zero crossings in the rectifier current is reduced. However, where there is low real power, the problem of multiple zero crossings is increased. To account for low real power, the system may increase the reactive power in order to avoid multiple zero crossings. However, by increasing the reactive power, the overall efficiency of the system is reduced because the reactive power circulates within the system without performing actual work.

In another technique, a system may reduce the possibility or occurrence of multiple zero-crossings by increasing the impedance matching network (IMN) inductance. The presence of multiple zero crossings in the rectifier current may be largely due to particular harmonics within the current (e.g., the third and fifth harmonics). Increasing the IMN inductance increases the effectiveness of the low pass filter in the wireless power receiver, thereby reducing the harmonics and reducing the likelihood of multiple zero crossings. However, the increased IMN inductance increases the cost of the system, and can result in lower efficiency as well.

With the techniques and drawbacks noted above in mind, example systems, methods, and apparatuses of the present disclosure use the first harmonic of the rectifier current as a reference signal for synchronization between the wireless power transmitter and wireless power receiver. This technique makes use of existing signals within the system, thereby providing synchronization without additional expensive components or reduced efficiency. An example wireless power system comprises a wireless power transmitter and a wireless power receiver. The wireless power transmitter comprises a transmitter controller. The wireless power receiver comprises filter circuitry configured to receive an input signal from the wireless power transmitter, identify a harmonic signal of the input signal, and generate a filtered signal. The wireless power receiver also comprises converter circuitry configured to convert the filtered signal to an output signal. And the wireless power receiver further comprises a receiver controller configured to control the converter circuitry, wherein the receiver controller is synchronized with the transmitter controller based on the harmonic signal identified by the filter circuitry.

In some examples, the converter circuitry of the wireless power receiver further comprises a plurality of switches, each switch configured to transition between an on state and an off state, and the receiver controller is further configured to control the state of each of the plurality of switches according to a switch sequence. In some examples, the receiver controller is further configured to synchronize a timing of the switch sequence with zero-crossing points of the harmonic signal. In some examples, the harmonic signal is a first harmonic of the input signal. Additionally, the harmonic signal may be a sinusoidal signal.

In some examples, the converter circuitry of the wireless power receiver is a rectifier. And further, in some examples the input signal comprises a rectifier current.

In some examples, the harmonic signal is delayed with respect to the input signal by a phase delay, and the receiver controller is further configured to synchronize with the transmitter controller based on (1) the harmonic signal identified by the filter circuitry and (2) the phase delay.

In some examples, the wireless power transmitter comprises a plurality of transmitter switches, each transmitter switch configured to transition between an on state and an off state, and the converter circuitry comprises a plurality of receiver switches, each receiver switch configured to transition between an on state and an off state. The receiver controller may be further configured to control the state of each of the plurality of receiver switches according to a switch sequence to synchronize with the plurality of transmitter switches, based on the harmonic signal.

In some examples, a wireless power system for charging a vehicle is described. The wireless power system comprises a ground assembly comprising a wireless power transmitter; a vehicle assembly comprising a wireless power receiver; and control circuitry. The control circuity is configured to control at least one of the ground assembly or the vehicle assembly, and comprises filter circuitry configured to receive an input signal from the wireless power transmitter, identify a harmonic signal of the input signal, and generate a filtered signal. The control circuitry further comprises converter circuitry configured to convert the filtered signal to an output signal, and a receiver controller configured to control the converter circuitry, wherein the receiver controller is synchronized with the wireless power transmitter based on the harmonic signal identified by the filter circuitry.

In some examples, a vehicle assembly for a wireless power transfer system is described. The vehicle assembly comprises filter circuitry configured to receive an input signal from a wireless power transmitter of a ground assembly, identify a harmonic signal of the input signal, and generate a filtered signal. The vehicle assembly also comprises converter circuitry configured to convert the filtered signal to an output signal, and a receiver controller configured to control the converter circuitry, wherein the receiver controller is synchronized with the wireless power transmitter based on the harmonic signal identified by the filter circuitry.

In some examples, a ground assembly for a wireless power transfer system is described. The ground assembly comprises filter circuitry configured to receive an input signal from a wireless power transmitter, identify a harmonic signal of the input signal, and generate a filtered signal. The ground assembly also comprises converter circuitry configured to convert the filtered signal to an output signal, and a receiver controller configured to control the converter circuitry, wherein the receiver controller is synchronized with the wireless power transmitter based on the harmonic signal identified by the filter circuitry.

### Brief Description of the Drawings

The above and other objects and advantages of the disclosure will be apparent upon consideration of the following detailed description, taken in conjunction with the accompanying drawings, in which:
FIG. 1A illustrates a block diagram of an example wireless power transfer system, in accordance with some embodiments of the disclosure;
FIG. 1B illustrates a hierarchical block diagram of an example wireless power transfer system for wireless electric vehicle charging, in accordance with some embodiments of the disclosure;
FIG. 2 illustrates a schematic diagram of a portion of a wireless power receiver in a wireless power transfer system, in accordance with some embodiments of the disclosure;
FIG. 3 illustrates a graph showing example waveforms of various components of the wireless power receiver of FIG. 2, in accordance with some embodiments of the disclosure.
FIG. 4 illustrates a flow chart of an example process for performing synchronization in a wireless power transfer system, in accordance with some embodiments of the disclosure;
FIG. 5 illustrates an example parking facility with multiple wireless charging stations for use by electric vehicles in accordance with systems and methods of the present disclosure.

### Detailed Description

As noted above, example systems, methods, and apparatuses of the present disclosure may make use of a harmonic signal (e.g., a first harmonic of the rectifier current) as a reference signal for synchronization between a wireless power transmitter and a wireless power receiver. This technique may make use of existing signals within the wireless power system, thereby providing synchronization between the transmitter and receiver without additional expensive components or reduced efficiency.

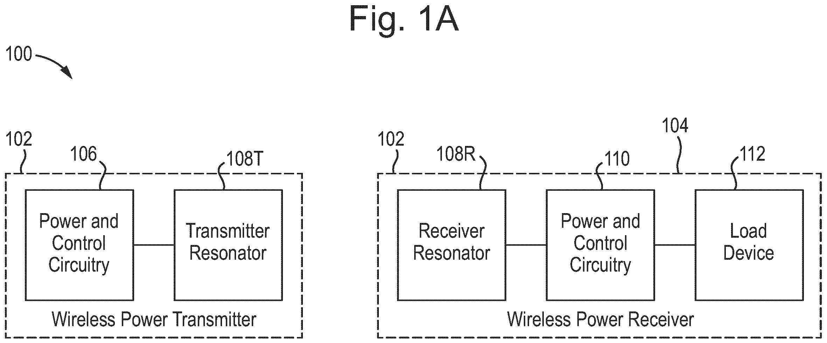

FIG. 1A depicts a diagram of an example wireless power system 100. The system 100 includes a wireless power transmitter 102 and a wireless power receiver 104. A wirelessly powered or wirelessly charged device 112 is coupled to the receiver 104. Wirelessly powered or wirelessly charged devices 112 can include, for example, high-power devices such as electric vehicles or electronic devices such as laptops, smartphones, tablets, and other mobile electronic devices that are commonly placed on desktops, tabletops, bar tops, and other types of surfaces.

For simplicity, wireless power system 100 will be discussed in the context of a wireless charging system for an electric vehicle. For example, system 100 may be a highly-resonant wireless power transfer (HRWPT) system which may operate over a wide range of coupling factors k, load conditions (such as a battery voltage), and environmental conditions that detune the inductances of the resonators (e.g., due to spatial variations and interfering objects). Furthermore, in order to perform wireless charging of electric vehicles, system 100 may be required to operate with high voltages (e.g., between 360V and 800V) and/or high currents (e.g., between 26 A and 40 A) to achieve a suitable range of power (e.g., 0 to 3.7 kW, 0 to 7.7 kW, 0 to 11 kW, or 0 to 22 kW).

The wireless power transmitter 102 may convert power from an external power source (e.g., power grid or generator) to electromagnetic energy which may be transmitted between resonators 108T and 108R to wireless power receiver 104. The receiver 104 may then convert the oscillating energy received by the resonator 108R to an appropriate form for use by the device 112 (e.g., charging an electric vehicle battery). More specifically, the receiver power and control circuitry 110 can convert AC voltage and current from resonator 108R to DC power within appropriate voltage and current parameters for device 112.

The transmitter power and control circuitry 106 may include, among other things, a transmitter controller, which may control one or more aspects of the transmitter 102 (e.g., controlling one or more switches of the transmitter 102). The transmitter power and control circuitry 106 may also include one or more circuits or components to isolate the source electronics from the power supply, so that any reflected power or signals are not coupled out through the source input terminals. The source power and control circuitry 106 can drive the transmitter resonator 108T with alternating current, such as with a frequency greater than 10 kHz and less than 100 MHz (e.g., 85 kHz). The transmitter power and control circuitry 106 can include other circuitry such as, for example, power factor correction (PFC) circuitry, a transmitter controller, impedance matching circuitry, a power inverter, a DC-to-DC converter, an AC-to-DC converter, a power amplifier, and/or any combination thereof.

The receiver power and control circuitry 110 can be designed to transform alternating current power from the receiver resonator 108R to stable direct current power suitable for powering or charging one or more devices 112. For example, the receiver power and control circuitry 110 can be designed to transform an alternating current power at one frequency (e.g., 85 kHz) from resonator 108R to alternating current power at a different frequency suitable for powering or charging one or more devices 112. The receiver power and control circuitry 110 can include, for example, a receiver controller, filter circuity, converter circuitry, impedance matching circuitry, rectification circuitry, voltage limiting circuitry, current limiting circuitry, AC-to-DC converter circuitry, DC-to-DC converter circuitry, DC-to-AC circuitry, AC-to-AC converter circuitry, battery charge control circuitry, and/or any combination thereof.

Wireless power transmitter 102 and wireless power receiver 104 may have tuning capabilities, for example, dynamic impedance matching circuits, that allow adjustment of operating points to compensate for changing environmental conditions, perturbations, and loading conditions that can affect the operation of the source and device resonators and the efficiency of the energy transfer. The tuning capability can be controlled automatically, and may be performed continuously, periodically, intermittently or at scheduled times or intervals. In some implementations, tuning is performed synchronously between the transmitter 102 and the receiver 104 as described in more detail below.

The wireless power transmitter 102 may also include a plurality of sensors such as voltage, current, and power sensors to measure transmitter operating parameters. A transmitter controller may use measurements from the sensors to control the operation of the transmitter 102 and to tune the transmitter IMN. Transmitter operating parameters measured by the sensors can include, but are not limited to, inverter bus voltage (V_{bus}), transmitter input power, inverter AC voltage (V_{AC}), inverter AC current (I_{AC}), transmitter power factor (pf), and other voltages and currents as needed for safety checks. In some implementations, the transmitter input power may be measured at an AC input to a transmitter PFC circuit. In some implementations, the transmitter input power may be measured as an inverter power (Pᵢₙ). In some implementations, the inverter power (Pᵢₙ) is measured at the DC input of an inverter of the power and control circuitry 106. In some implementations, inverter power (Pᵢₙ) may be measured at the AC output of the inverter. Transmitter power factor can be measured as the phase difference (φ) between the inverter AC voltage (V_{AC}) and inverter AC current (I_{AC}), where the power factor is the cosine of the phase difference (φ). In some implementations, the phase difference (φ) can be used as a proxy for power factor. That is, a transmitter controller can perform operations based on the phase difference (φ) instead of calculating an actual power factor value. In some implementations, transmitter power factor (pf) can be calculated based on equivalent resistance and reactance values as seen at the output of the inverter. For example, the phase difference (φ) can be represented by: φ=arctan(Xᵢₙᵥₑᵣₜₑᵣ / Rinverter).

The wireless power receiver 104 may also include a plurality of sensors such as voltage, current, and power sensors to measure receiver operating parameters. Each of these sensors may measure similar signals as are described above with respect to the wireless power transmitter 102. A receiver controller may use measurements from one or more sensors to control the operation of the receiver 104 and to tune the receiver IMN. Receiver operating parameters measured by the sensors can include, but are not limited to, receiver output power (Pout), rectifier AC voltage, rectifier AC current, rectifier DC voltage, rectifier DC current, and any other suitable voltages or currents.

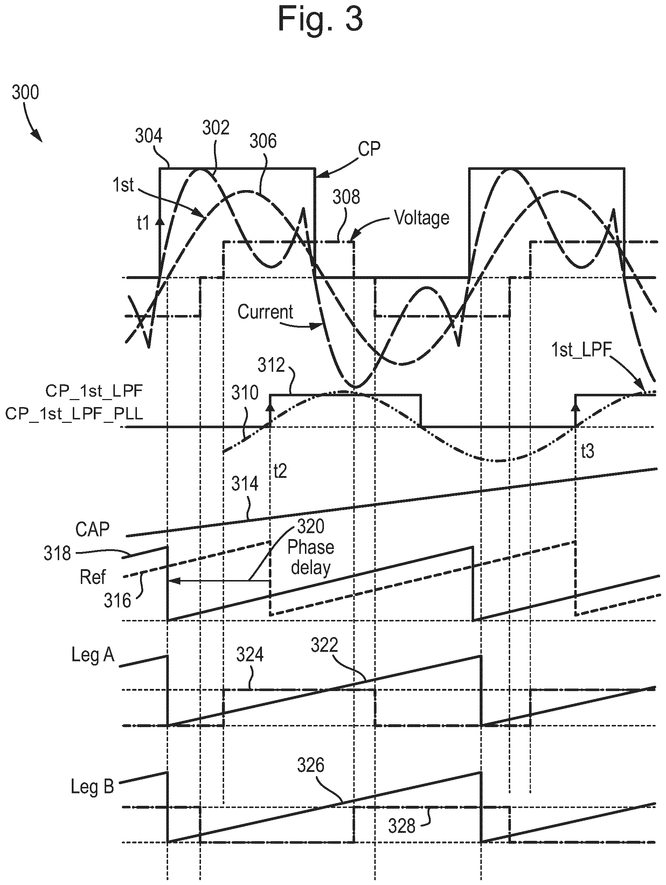

Within the context of wireless power transfer from a transmitter to a receiver (e.g., from transmitter 102 to receiver 104), it can be important to synchronize the two parts of the system to regulate and ensure that power is properly transmitter from the transmitter to the receiver. If the polarities of the current and the voltage at the transmitter and receiver are the same, power is transferred to the receiver and can be used or stored by the load device 112. Alternatively, if the polarities of the current and voltage are the opposite at the transmitter and receiver, power is taken from the load device 112. If the voltage is zero (e.g., level 0 as dictated by the state of various switches in the receiver), the power is circulated within the receiver. In the other words, it is critical to know the starting timing of the current signal at the receiver in order to properly adjust the voltage at the receiver to regulate the power. As discussed in further detail below with respect to FIG. 3, the starting timing of the current signal at the receiver can be detected based on an identification of a zero-crossing within the current signal. However, when there are multiple zero-crossings within a given period of the signal, it is challenging to know which zero-crossing is the true starting point of the current signal. As discussed in further detail below, examples of this disclosure use a harmonic signal of the receiver current (e.g., the first harmonic), which only includes one zero-crossing per period. However, the zero-crossing of the first harmonic may not be aligned completely with the timing of the current signal (e.g., the first harmonic may be offset by a phase delay). The receiver controller may account for this misalignment in order to control the wireless power receiver 104 to be synchronized with the wireless power transmitter 102.

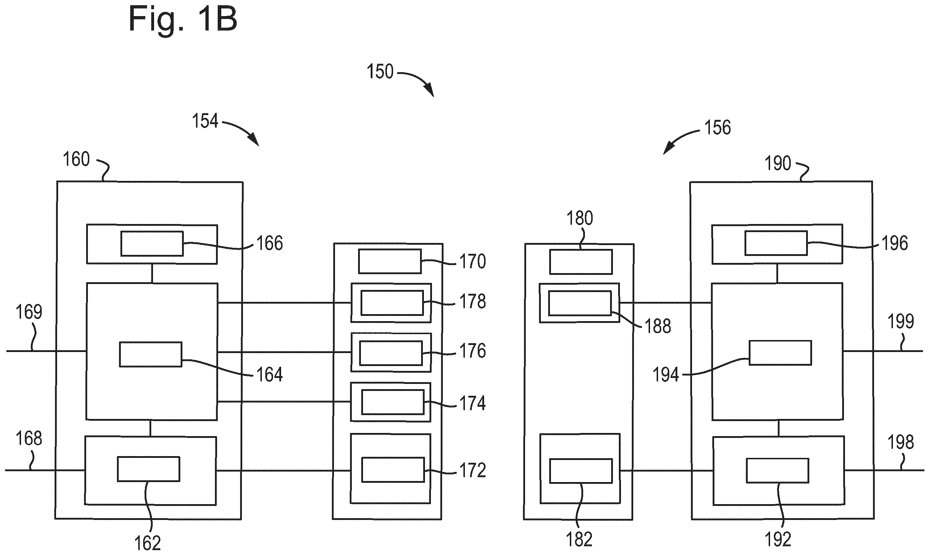

FIG. 1B is a hierarchical block diagram of an example WPT system 150 for wireless electric vehicle charging. At the top hierarchy level, the system 150 comprises a GA 154 and a VA 156. The next lower level shows the GA 154 composed of a GA power conversion & control unit 160 and a WPT ground unit 170, and various connections between these blocks. Splitting the GA into two blocks implies implementations where the GA power conversion & control unit and the ground unit are physically separated and interconnected via a several meters long multiwire cable herein referred to as GA feeder cable (not shown). However, it should not exclude implementations where the GA power conversion & control unit is entirely or partially integrated in the ground unit forming one physical unit with a common housing (not shown).

At the third level, the GA power conversion & control unit includes a GA power converter 162, a GA controller 164, and a GA wireless communication unit 166. The ground unit 170 integrates a GA WPT coil 172 as well as various functions as needed for Foreign Object Detection (FOD), Living Object Detection (LOD), Vehicle Detection (VD), and Position Detection (PD). In the example of FIG. 1B, these functions are provided by a FOD unit 174, a LOD unit 176, and a GA PD unit 178, each configured and connected to the GA controller for exchanging data and control. In some implementations, these functions share or partially share one common hardware platform referred to as a multi-purpose detection system.

In an implementation conforming with the SAE standard, the GA wireless communication unit 166 is a WiFi Access Point providing an air interface to a Wireless Local Area Network (WLAN) of a parking facility. Certain parking facilities provide a central WiFi access point associated to multiple GAs. In such implementations, the GA wireless communication unit 166 is external to the GA 154. In another implementation, the GA wireless communication unit is integral part of the ground unit 170.

The GA WPT coil 172 may include a tuning & impedance matching network (not shown) forming a resonant circuit and the ground-unit is referred to as the GAR as previously mentioned. In other implementations, the tuning & impedance matching network or parts thereof are included in the GA power converter 162. Further, the GA controller 164 interfaces to the GA power converter 162 and the GA wireless communication unit 166 for data exchange and system control. It also provides a data interface 169 (e.g., Ethernet) to communicate with a system external entity e.g., via a backbone network. Moreover, the GA power converter 162 disposes a power interface 168 for feeding or receiving AC or DC power.

At the second level, FIG. 1B shows the VA 156 composed of a WPT vehicle unit 180 connected to a VA power conversion & control unit 190. At a third level, the VA power conversion & control unit 190 comprises a VA power converter 192, a VA controller 194, and a VA wireless communication unit 196. The vehicle unit 180 comprises a VA WPT coil 182 and a VA PD unit 188, the vehicle-side counterpart of the GA PD unit 178 interfacing with the VA controller for data exchange and control. Splitting the VA into two blocks implies implementations where the VA power conversion & control unit and the vehicle unit are physically separated and interconnected via a multiwire cable herein referred to as VA feeder cable (not shown). However, this should not exclude implementations where the VA power conversion & control unit 190 is entirely or partially integrated in the vehicle unit 180 forming one physical unit with a common housing (not shown).

In a standard-conforming implementation, the VA wireless communication unit 196 is a WiFi Client. As with the GA wireless communication unit, the VA wireless communication unit may be external to the VA 156, e.g., mounted anywhere on the vehicle or parts or it may be partially or fully integrated into the vehicle unit.

In some implementations, the VA WPT coil 182 includes a tuning & impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 199, e.g., a CAN bus interface to communicate with an external vehicle onboard entity. Moreover, the VA power converter disposes a power interface 198 for feeding or receiving DC power.

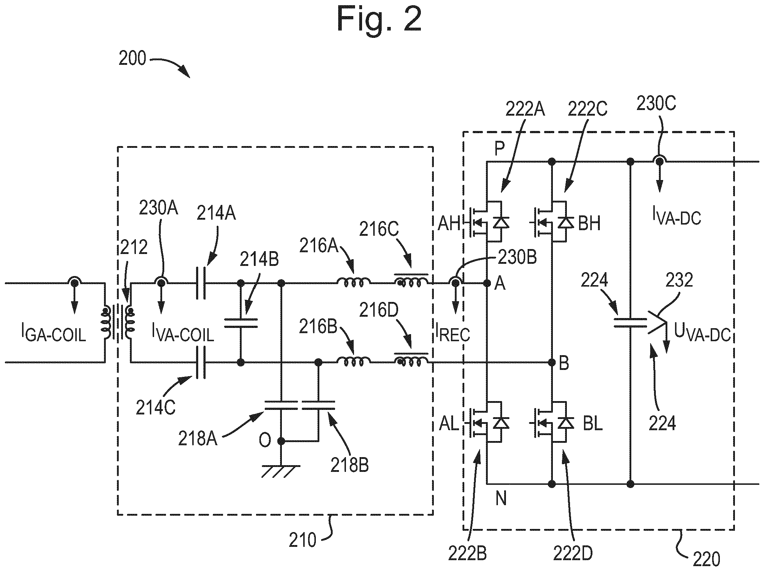

FIG. 2 illustrates and example schematic diagram 200 of a portion of a wireless power receiver, such as receiver 104, in accordance with some embodiments. Diagram 200 may illustrate filter circuity 210 and converter circuitry 220. The receiver may also include a receiver controller (not shown), which may receive signals from one or more sensors (e.g., to measure various receiver voltages and currents) as well as control the state of one or more switches of the converter circuitry 220, in order to synchronize with the wireless power transmitter.

In the illustrated embodiment of FIG. 2, the filter circuitry 210 may include a receiver coil 212. The receiver coil 212 may be coupled with a corresponding coil of the transmitter (e.g., transmitter 102) in order to receive power from the transmitter. The filter circuitry 210 may also include one or more other components such as differential mode capacitors 214A-C, differential mode inductors 216A-B, common choke 216C-D, and common mode capacitors 218A-B, which may enable the received signal from the coil 212 to be filtered and converted into a more desirable form (e.g., removing one or more harmonics).

The converter circuitry 220 may include a plurality of switches 222A-D. Each switch 222A-D may be a metal oxide semiconductor field effect transistor (MOSFET), and may be configured to transition between an on state and an off state, controlled by the receiver controller. The switches 222A and 222B may form a switch leg A, and switches 222C and 222D may form switch leg B. Switch legs A and B may operate together (e.g., controlled by the receiver controller) to convert the signal from the filter circuitry 210 into a signal usable by the load (e.g., device 112), which may be coupled to the output of the receiver.

The converter circuitry 220 may also include a capacitor 224. The capacitor 224, in combination with the switches 222A-D, may operate to create a converter that converts an input signal from the filter circuitry 210 into a usable signal for the load (e.g., AC/DC conversion). The receiver controller may control the switching of the switches 222A-D using a pulse-width-modulation (PWM) approach in order to achieve the desired output. As noted elsewhere, the switching may be controlled based on the detected zero-crossing of a signal in the receiver (e.g., the first harmonic of the input signal to the receiver). The receiver controller may also control the timing of switching of the switches 222A-D between their respective on and off states in order to synchronize with the transmitter.

The receiver may also include one or more sensors configured to perform current and voltage measurement at various point within the circuitry. For instance, sensors may be configured to measure current at points 230A (e.g., current at the receiver coil), 230B (e.g., current in the receiver), and 230C (current at the output), and measure voltage at point 232 (voltage at the output). The sensor data may be used by the receiver controller for various purposes such as, for example, to regulate the charging current, to ramp up and ramp down power smoothly, to operate the system in a low power mode if applicable, to emit a low power (beacon) signal that can be used to assist with alignment of the transmitter and receiver, and other tuning and testing purposes.

FIG. 3 illustrates a graph 300 of signals within the receiver circuity at various points, and over a duration of approximately two cycles when power is being transferred from the transmitter to the receiver. Signal 302 represents the current signal within the receiver, for example the current measured at point 230A, 230B, or 230C in FIG. 2. Due to the nature of the power transfer from the transmitter to the receiver, the current signal may include multiple zero-crossings per cycle. As can be seen in FIG. 3, the current signal 302 rises from negative to positive at point t1, and then dips near the horizontal axis or zero amplitude level, before rising again and then ultimately dropping below from positive to negative. The current signal then rises near the horizontal axis, before dropping again and then ultimately crossing the horizontal axis from negative to positive again. This cycle is then repeated at the operating frequency of the wireless power transfer system (e.g., 85kHz). As shown in FIG. 3, the current signal 302 only includes two zero-crossings per cycle (e.g., one from negative to positive, and one from positive to negative). However, depending on the specific devices, frequencies, amplitudes, and other parameters of the system, the current signal may not be as clean as is illustrated in FIG. 3. Instead, the current signal may include three, four, or more zero-crossings per cycle. For example, the "dip" in the current during a cycle that is illustrated in FIG. 3 as remaining on either the positive side or the negative side of the horizontal axis may instead reach all the way below or above the horizontal axis, thereby introducing additional zero-crossings into the current signal 302.

Signal 304 illustrated in FIG. 3 corresponds to the crossing point of the current signal 302. That is, signal 304 is positive when the current signal 302 is positive, and signal 304 is zero when the current signal 302 is negative. In some examples, signal 304 may be used to synchronize the receiver with the transmitter. However, as noted above, there are certain drawbacks to using this signal, because it corresponds to the current signal 302 directly, which may introduce multiple zero-crossings per cycle.

Signal 306 corresponds to the first harmonic of the current signal 302. The first harmonic signal 306 may be determined by passing the current signal through small-signal low pass filter (LPF) circuitry. In one example, the first harmonic of the current signal 306 is determined by the receiver controller. For instance, the receiver controller may receive the current 302 from a suitable sensor (e.g., a sensor measuring the current at point 230B). The sensed current 302 may then be filtered by a low-pass filter to acquire signal 310, which corresponds to the LPF first harmonic. This LPF introduces the delay between 306 and 310. In one example, this delay is detected and calibrated automatically during the start-up, where there are no high-order harmonics in 302. This is because during start-up, signal 302 and signal 306 may be the same. Therefore, the phase between 304 and 312 during this stage of start-up may comprise the delay 320. At a later stage (e.g., after start-up), during power transfer, signal 312 is detected by the receiver controller and shifted to the left (as illustrated in FIG. 3) by the delay amount 320 obtained during the start-up. This results in the estimated zero-crossing point of the first harmonic signal 306.

Signal 308 corresponds to the combined voltage of leg A (e.g., signal 324) and leg B (e.g., signal 328) of the receiver.

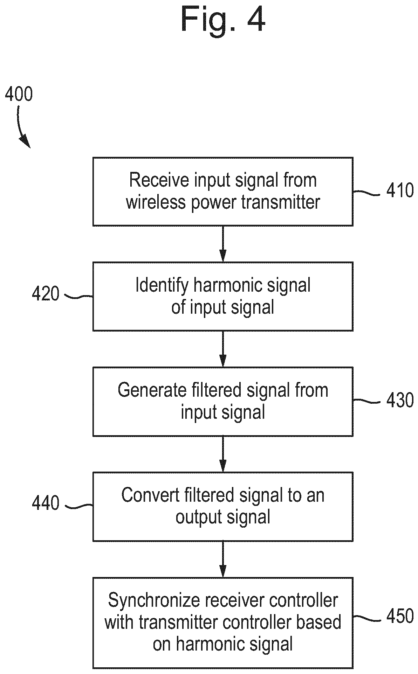

Signal 310 corresponds to the first harmonic of the rectifier current signal 302, after passing through a low pass filter. The low pass filter may be configured to remove higher order harmonics. As illustrated in FIG. 4, the filtering may introduce a delay (e.g., phase delay 320), which must be accounted for in order to properly synchronize.

Signal 312 corresponds to the crossing point of signal 310. That is, signal 312 is set to be positive (or high) when the first harmonic of the current signal after being filtered 310 is above zero, and is set to zero (or low) when the first harmonic of the current signal after being filtered 310 is below zero. The relationship between signal 312 and 310 is similar to the relationship between signals 302 and 304 noted above.

Signal 314 corresponds to a counter in the receiver controller that is used to capture the timings of the changes in signal 312 (e.g., the zero crossings of the first harmonic of the current after being filtered to remove higher order harmonics).

Signal 316 corresponds to a reference signal (e.g., an 85kHz counter) which is used as a reference signal for controlling one or more components of the receiver, such as the switches 222A-D. Synchronization, as noted herein, may comprise shifting this reference signal 316 to a modified reference signal 318, so as to align with the positive zero crossing of the first harmonic of the receiver current 306, so as to ensure that the receiver and transmitter are synchronized and power can be transferred to the receiver. During operation, reference signal 316 may be misaligned initially, due to the phase delay 320 introduced by filtering the first harmonic signal 310 using the low pass filter. The phase delay 320 may be identified by the receiver controller, and the reference signal 316 may be adjusted to remove the phase delay and provide a modified reference signal 318. The modified reference signal 318 may then be used to control the operation of the receiver to synchronize with the transmitter.

Signals 322 and 326 may be counter signals or reference signals used to control the timing of switching of the switches 222A-D of the A leg and B leg of the receiver. In some examples, the signals 322 and 326 may be the same as the modified reference signal 318, may be determined based on the modified reference signal 318, and/or may be synchronized to the zero crossing of the first harmonic of the current signal 306. Signals 324 and 328 correspond to the voltages of the A leg and B leg respectively.

The synchronization process may be described in another way, which includes a start-up stage, and a power transfer stage. During the start-up stage: (1) signal 302 is sensed with a current sensor (e.g., at point 230B), (2) signal 302 is then used to produce signal 304 by using a comparator, and signal 310 with a low pass filter. During the start-up stage, signal 302 is the same as signal 306. Also during the start-up stage, the phase difference between signal 304 and signal 312 is the phase delay 320. This phase delay 320 is stored for later use during the power transfer stage.

During the power transfer stage, signal 302 is used to produce signal 310 by using a low pass filter. Signal 310 is used to produce signal 312 with a comparator. Signal 312 is then used to produce signal 316. And signal 316 is shifted based on the stored phase delay 320 from the start-up stage. The shifted signal 316 is then used to produce signal 318, which is then used to generate the voltages to control leg A and leg B, so as to produce signal 308 and control the power transfer.

FIG. 4 is an example flowchart of a process 400 for synchronizing a wireless power receiver with a wireless power transmitter within a wireless power transfer system, in accordance with some examples of the disclosure. The process 400 may be carried out by systems and devices described herein, such as those shown and described with respect to FIGS. 1-3. One or more actions of the process 400 may be incorporated into or combined with one or more actions of any other process or embodiments described herein. The process 400 may be saved to a memory or storage as one or more instructions or routines that may be executed by a corresponding device or system to implement the process 400.

At step 410, the process 400 includes receiving an input signal from a wireless power transmitter. This input signal may be received by the wireless power receiver. For example, as shown in FIG. 2, the receiver coil 212 may receive an input signal from the transmitter coil of the transmitter.

At step 420, the process 400 includes identifying the first harmonic signal of the input signal. The input signal may comprise a current signal, which may be measured by one or more sensors of the wireless power receiver at point 230B. The receiver controller may receive the signal(s) from the one or more sensors, and may filter the sensor signal to identify the first harmonic signal. As shown in FIG. 3, the input signal may include signal 302 (e.g., the current within the receiver at point 230B, for example), and the first harmonic signal may include signal 306. In order to identify the first harmonic signal of the input signal, the receiver controller may pass the input signal through a low pass filter to remove higher order harmonic signals, and to isolate the first harmonic.

At step 430, the process 400 includes generating a filtered signal from the input signal. In an example, a low pass filter may be configured to process the input signal to remove higher order harmonics, and/or to process the input signal into a form suitable for conversion by the converter circuitry 220.

At step 440, the process 400 includes converting the filtered signal to an output signal. This may include processing the filtered signal from the filter circuity using converter circuitry (e.g., converter circuitry 220). The converter circuitry may include one or more switches, switch legs, and/or other circuitry components configured to process the filtered signal into a form suitable for use by a load device. The converter circuitry may be controlled by the converter controller (e.g., controlling the timing of state changes for each switch). In one example, step 440 may include converting the filtered signal from AC to DC, from DC to AC, from a first DC level to a second DC level, and/or from any format to any other suitable format.

At step 450, the process 400 may include synchronizing the receiver controller with the transmitter controller based on the harmonic signal. As noted above, synchronization may include synchronizing the timing of state changes of one or more switched of the receiver in order to ensure that power is properly transmitted to the load device. The process is described with respect to FIG. 3, and the respective signals and timings illustrated therein. In one example, the receiver controller may identify a harmonic signal in a received input signal (e.g., filtering a current signal to remove higher order harmonics). As noted above, this may ensure that only one zero crossing from negative to positive occurs in the harmonic signal per cycle. The receiver controller may also determine a phase delay introduced by filtering of the input signal, and may adjust a timing of the harmonic signal to align a modified harmonic signal with the zero crossing of current signal at the receiver. The receiver controller may then use the modified harmonic signal (which has been shifted to account for the phase delay) as the baseline for synchronization. Synchronization may include, for example, controlling the timing of state changes for one or more switches within the wireless power receiver, to ensure proper timing and transfer of power into the load device or load battery.

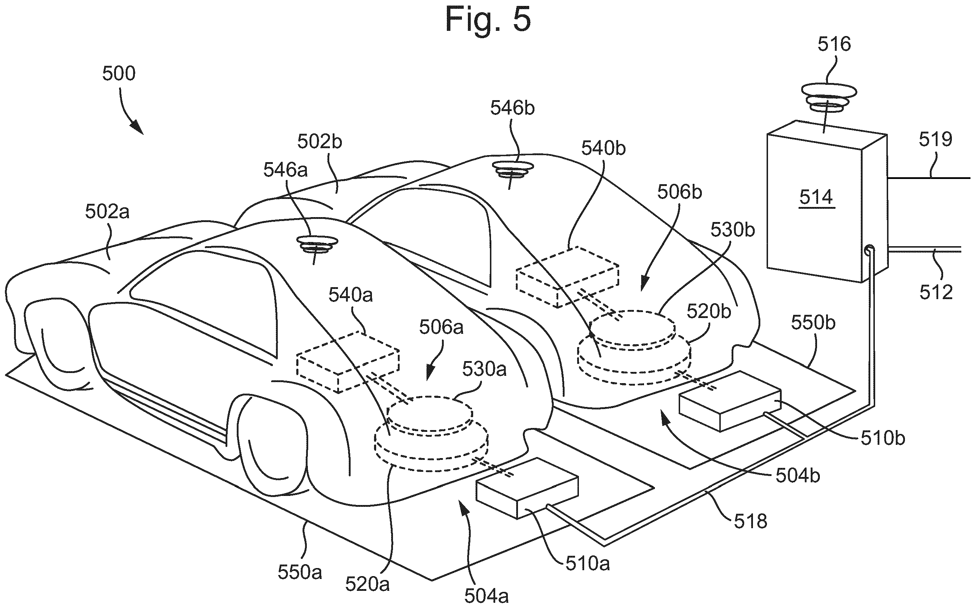

FIG. 5 illustrates an example of a parking facility 500 providing wireless charging services in parking spots 550a and 550b, including a plurality of WPT systems suitable for use in systems and methods of the present disclosure. Two wireless charging-enabled vehicles, 502a, 502b integrating WPT vehicle units 530a, 530b are each parked over a WPT ground unit, 520a, 520b. Both vehicle unit and ground unit include a WPT coil (not shown) sometimes also referred to as an induction coil configured to wirelessly transfer power based on the Faraday induction principle. Both vehicle unit and ground unit also include respective portions of a position detection system. In some implementations, the ground units are surface mounted on the floor. In other implementations, the ground units are flush mount with the floor or buried in the ground (e.g., in the asphalt). The power converters 510a, 510b convert power received by WPT vehicle units 530a, 530b to a form suitable for charging the vehicle's traction battery (not shown). In some examples and as described in U.S. Patent US 9,561,730 B2, the power converters 540a, 540b may be integrated with power converters used for plug-in charging of the vehicle, commonly called on-board chargers (OBC), or other on-board vehicle components. The WPT ground units 520a, 520b are shown linked to external power converters 510a, 510b, each connected to a power supply bus 515. In some implementations, the power converters 510a, 510b are configured and mounted as a "wall box". In other implementations, the power converters or parts thereof are integrated into the WPT ground units. The power supply bus 518 is in turn connected to a central power distribution unit 514. In some implementations and operations, the central power distribution unit receives power from a power utility 512 sometimes referred to as "power grid" and provides DC power to the bus 518, and the power converters 510a, 510b are inverters, such as the multi-level inverter described in provisional U.S. Application 18/486,830, filed October 13, 2023, and incorporated here by reference. The power converters 510a, 510b, provide low-frequency (LF) power signals, such as the 85 kHz signals used for WPT according to the SAE J2954 standard, to the WPT ground units 520a, 520b, to turn into LF magnetic fields for WPT. In other examples, the power distribution unit 514 provides the LF signals directly to each WPT ground unit, and power converters 510a, 510b are simpler or not present. In yet other examples, the power distribution unit 514 and bus 518 are not present, and the power converters 510a, 510b are each connected directly to the power utility 512 and convert AC power from the utility to LF power for wireless power transfer. The combination of a WPT ground unit (e.g., 520a), a power converter (e.g., 510a), and any other ground-side electronics (not shown) constitutes a wireless charging station (e.g., 504a) as indicated in FIG. 5. In some cases, the WPT ground units 520a, 520b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 530a, 530b are sometimes referred to as Vehicle Assembly Resonators (VAR) or vehicle assembly pads and the combination of a WPT vehicle unit (e.g., 530a) and a power converter (e.g., 540a) and any other vehicle-side electronics (not shown) constitutes a Vehicle Assembly (VA) (e.g., 506a, 506b). Each of the power connections shown may be bi-directional, allowing the vehicles to discharge power from their batteries to the power utility 512 in a vehicle-to-grid (V2G), or other load in a vehicle-to-home (V2H), vehicle-to-vehicle (V2V) or similar arrangement (generally V2X).

FIG. 5 also illustrates vehicles 502a, 502b, and power distribution unit 514 providing wireless communication units 546a, 546b, and 516, respectively. The wireless communication unit 516 may be configured to wirelessly communicate with the vehicles 502a and 502b e.g., based on a Wi-Fi IEEE 802.1 1x standard. In SAE standard conformant wireless charging systems, this communication is used for exchanging data between the GA and VA for purposes of WPT control and safety. Further, the power distribution unit 514 provides an interface 519 configured to communicate with external entities (e.g., a charging operation center) via a communication backhaul (not shown). This backhaul may rely on radio communications (e.g., via communication unit 516), power line communications (e.g., via power utility 512), or any other line communications including fiber optical. In the example parking facility 500, wireless communication unit 516 is configured to serve multiple vehicles. In other parking facilities, each of the wireless charging stations 504a, 504b provide a wireless communication unit (not shown) configured to communicate with the respective vehicles 502a, 502b.

Beside the WPT coil, the WPT ground units 520a, 520b or the WPT vehicle units 530a, 530b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit.

The embodiments described above have been described with reference to use in a particular type of converter. It should be appreciated that the synchronization methods, systems, and devices described herein may also be used in other types of converters, including full bridge converters, multilevel converters (e.g., flying capacitor converters), and more. Additionally, the synchronization described herein may be used in a vehicle assembly, a ground assembly, and/or in any other system of device that performs wireless power transfer.

The systems, devices, and processes discussed above are intended to be illustrative and not limiting. One skilled in the art would appreciate that the actions of the processes discussed herein may be omitted, modified, combined, and/or rearranged, and any additional actions may be performed without departing from the scope of the invention. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real-time. It should also be noted that the systems and/or methods described above may be applied to, or used in accordance with, other systems and/or methods.

All of the features disclosed in this specification (including any accompanying claims, abstract, and drawings), and/or all of the steps of any method or process so disclosed, may be combined in any combination, except combinations where at least some of such features and/or steps are mutually exclusive.

Each feature disclosed in this specification (including any accompanying claims, abstract, and drawings), may be replaced by alternative features serving the same, equivalent, or similar purpose unless expressly stated otherwise. Thus, unless expressly stated otherwise, each feature disclosed is one example only of a generic series of equivalent or similar features.

Throughout the description and claims of this specification, the words "comprise" and "contain" and variations of them mean "including but not limited to", and they are not intended to (and do not) exclude other moieties, additives, components, integers, or steps. Throughout the description and claims of this specification, the singular encompasses the plural unless the context otherwise requires. In particular, where the indefinite article is used, the specification is to be understood as contemplating plurality as well as singularity, unless the context requires otherwise.

The reader's attention is directed to all papers and documents which are filed concurrently with or previous to this specification in connection with this application and which are open to public inspection with this specification, and the contents of all such papers and documents are incorporated herein by reference.

## Claims

1. A wireless power system comprising a wireless power transmitter and a wireless power receiver, wherein:
the wireless power transmitter comprises a transmitter controller; and
the wireless power receiver comprises:
filter circuitry configured to receive an input signal from the wireless power transmitter, identify a harmonic signal of the input signal, and generate a filtered signal;
converter circuitry configured to convert the filtered signal to an output signal; and
a receiver controller configured to control the converter circuitry, wherein the receiver controller is synchronized with the transmitter controller based on the harmonic signal identified by the filter circuitry.

2. The wireless power system of claim 1, wherein:
the converter circuitry comprises a plurality of switches, each switch configured to transition between an on state and an off state; and
the receiver controller is further configured to control the state of each of the plurality of switches according to a switch sequence.

3. The wireless power system of claim 1, wherein the receiver controller is further configured to synchronize a timing of the switch sequence with zero-crossing points of the harmonic signal.

4. The wireless power system of any of claims 1 to 3, wherein the harmonic signal is a first harmonic of the input signal.

5. The wireless power system of any of claims 1 to 4, wherein the harmonic signal is a nearly sinusoidal signal.

6. The wireless power system of any of claims 1 to 5, wherein the converter circuitry comprises a rectifier.

7. The wireless power system of any of claims 1 to 6, wherein the input signal comprises a rectifier current.

8. The wireless power system of any of claim 1 to 7, wherein the harmonic signal is delayed with respect to the input signal by a phase delay, and wherein the receiver controller is further configured to synchronize with the transmitter controller based on (1) the harmonic signal identified by the filter circuitry and (2) the phase delay.

9. The wireless power system of any of claims 1 to 8, wherein:
the wireless power transmitter comprises a plurality of transmitter switches, each transmitter switch configured to transition between an on state and an off state;
the converter circuitry comprises a plurality of receiver switches, each receiver switch configured to transition between an on state and an off state; and
the receiver controller is further configured to control the state of each of the plurality of receiver switches according to a switch sequence to synchronize with the plurality of transmitter switches based on the harmonic signal.

10. A wireless power transfer system for charging a vehicle, the system comprising:
a ground assembly comprising a wireless power transmitter;
a vehicle assembly comprising a wireless power receiver; and
control circuitry configured to control at least one of the ground assembly or the vehicle assembly, wherein the control circuity comprises:
filter circuitry configured to receive an input signal from the wireless power transmitter, identify a harmonic signal of the input signal, and generate a filtered signal;
converter circuitry configured to convert the filtered signal to an output signal; and
a receiver controller configured to control the converter circuitry, wherein the receiver controller is synchronized with the wireless power transmitter based on the harmonic signal identified by the filter circuitry.

11. A vehicle assembly for a wireless power transfer system comprising:
filter circuitry configured to receive an input signal from a wireless power transmitter of a ground assembly, identify a harmonic signal of the input signal, and generate a filtered signal;
converter circuitry configured to convert the filtered signal to an output signal; and
a receiver controller configured to control the converter circuitry, wherein the receiver controller is synchronized with the wireless power transmitter based on the harmonic signal identified by the filter circuitry.

12. A ground assembly for a wireless power transfer system comprising:
filter circuitry configured to receive an input signal from a wireless power transmitter of a vehicle assembly, identify a harmonic signal of the input signal, and generate a filtered signal;
converter circuitry configured to convert the filtered signal to an output signal; and
a receiver controller configured to control the converter circuitry, wherein the receiver controller is synchronized with the wireless power transmitter based on the harmonic signal identified by the filter circuitry.
